# EUROPEAN PATENT APPLICATION

(11) **EP 1 233 554 A1**
(43) Date of publication of application: **21.08.2002**
(21) Application number: 00970061.8
(22) Date of filing: 25.10.2000
(51) Int. Cl.: H04B 17/00

(54) **FAILURE DETECTION SYSTEM AND FAILURE DETECTION METHOD**

(30) Priority: 28.10.1999 JP 30657799
(71) Applicant: NEC Corporation, Minato-ku, Tokyo 108-8001 (JP)
(72) Inventor: AZUMA, Tomohiro, NEC Corporation, Tokyo 108-8001 (JP)
(74) Representative: Glawe, Delfs, Moll & Partner
(86) International application number: JP0007460
(87) International publication number: WO01031814

(57) **Abstract**

In order to detect a failure of an amplifier or a filter of a local signal generating section of a receiver or a synthesizer of a radio communication unit, e.g., a radio base station unit accurately in real time, a local signal used for frequency conversion is inputted to the input of the amplifier or filter, only the local signal component is taken out of the output of the amplifier or filter and detected, and the detected voltage is compared with a failure detection level, thus judging whether the amplifier or filter is normal or not. A failure can be detected more accurately by varying the failure detection level depending on the variation of temperature or local signal frequency (channel frequency).

## Description

### Technical Field

The present invention relates to a failure detection system and failure detection method for a radio communication unit such as a radio base station unit having a transmitter and receiver and, more particularly, to a failure detection system, failure detection method, and the like which accurately detect a failure in a receiver that cannot obtain desired reception sensitivity due to a failure in an amplifier or filter.

### Background Art

Conventional receiver failure detection systems of this type for radio base station units include a system for detecting a failure by assigning a frequency (in the case of the FDD (frequency division duplex) system) or free slot (in the case of the TDD (time division duplex) system) that is not used for transmission/reception, or performing a loopback test in which a known signal is transmitted from the transmitter of the radio base station unit in a standby state, and reception and demodulation are performed by the receiver of the radio base station unit, thereby detecting a failure in the transmitter/receiver.

As a more practical example of the prior art of this type, a self-diagnostic system in a communication system in which a digital receiver in a standby state always exists is disclosed in Japanese Patent Laid-Open No. 63-26130. In order to detect the operation of a digital receiver in a standby state for reception, this self-diagnostic system has a noise generating circuit for generating a diagnosis signal having a spectrum distribution including the reception bands of all digital receivers. This noise generating circuit includes a switching circuit for intermittently interrupting a clock signal in accordance with a control signal and also interrupting a local oscillation frequency signal (local signal) outputted from a local oscillation circuit in accordance with the clock signal intermittently interrupted by the control signal, thereby generating a diagnosis signal. This self-diagnostic system uses the diagnosis signal outputted from this switching circuit. This self-diagnostic system can be used for only a communication system in which a digital receiver in a standby state always exists.

The radio transmission/reception system with the failure detection function disclosed in Japanese Patent Laid-Open No. 8-274727 is designed to detect a failure in an apparatus by test signal loopback operation in an antenna or transmitter/receiver and use a pseudo random signal as a test signal. In the self-diagnostic system for a receiver disclosed in Japanese Patent Laid-Open No. 4-27737, the receiver is set in a self-diagnostic state in accordance with a switching signal, and RF (radio frequency) and IF (intermediate frequency) test signals which are carrier frequencies are generated to separately diagnose failures in an RF-band circuit and IF-band circuit. In addition, Japanese Patent Laid-Open No. 2-25128 discloses a reception system failure diagnosis system for a transmitter/receiver, which mutes the reception function during failure diagnosis and uses an output from the mixer of the transmitter as a test signal for the receiver.

The following problems arise in the above conventional systems.

First, in order to detect a failure in an amplifier or filter in real time by using a signal other than an RF signal, an oscillator for a frequency used for failure detection is required in addition to, for example, local oscillation frequency signal generator (local signal generating section) which a receiver generally has, and an output from the oscillator must be supplied to the input side of a device for performing failure detection. This complicates the arrangement, and hence increases the cost of the unit.

Second, if a receiver or local signal generating section (synthesizer section) has a faulty amplifier or filter, and a failure in the amplifier or filter cannot be detected by a loopback test signal or the like, services are provided while the amplifier or filter is faulty.

Third, a loopback test is performed in a radio communication unit once per day at most in spite of the fact that the unit is required to provide services while always maintaining desired reception sensitivity. That is, failure detection is not performed in real time.

Fourth, the state of an amplifier or filter varies with the variation of temperature or frequency (channel frequency), but there is no means for properly handling such a situation. This makes it impossible to perform accurate failure detection.

It is the first object of the present invention to provide an inexpensive failure detection system, failure detection method, and the like for the receiver of a radio communication unit, which can detect a failure in the receiver in real time with a simple arrangement without using any special oscillator for generating a test signal or diagnosis signal.

It is the second object of the present invention to provide a failure detection system, failure detection method, and the like for a radio communication unit, which can detect a failure in real time which cannot be detected by a loopback test or the like.

It is the third object of the present invention to provide a failure detection system, failure detection method, and the like for a radio communication unit, which can accurately detect a failure even with the variation of temperature or frequency.

### Disclosure of Invention

A characteristic feature of the present invention is that a failure in an amplifier or filter is detected by using a local signal used for frequency conversion to accurately detect a failure in an amplifier or filter of the receiver or synthesizer section of a radio base station unit in real time.

A local signal that is also used for frequency conversion is inputted to the input side of such an amplifier or filter, and only a local signal component is extracted and detected from an output from the amplifier or filter. The detected voltage is compared with a failure detection level to judge whether the amplifier or filter operates normally. This judgment is done on the basis of the following phenomenon. If the amplifier or filter operates normally, it exhibits a predetermined gain or attenuation amount with respect to a local signal as well as a carrier. If the amplifier or filter fails, a detected voltage varies with respect to a local signal as well as a carrier.

More specifically, according to the present invention, there is provided a failure detection system for detecting a failure in a receiver having a high-frequency amplification circuit for amplifying a high-frequency signal and a mixer for mixing a local signal having a frequency different from a frequency of the high-frequency signal with an output signal from the high-frequency amplification circuit and outputting an intermediate-frequency signal, comprising a local signal supplying section for supplying the local signal to an input of the high-frequency amplification circuit, an extracting section for extracting only a frequency component of the local signal from the output signal from the high-frequency amplification circuit, a detecting circuit for detecting an output from the extracting section and outputting a detected voltage, and a failure detection circuit for comparing the detected voltage with a failure detection level and judging whether the high-frequency amplification circuit is normal.

According to the present invention, there is provided a failure detection method of detecting a failure in a receiver having a high-frequency amplification circuit for amplifying a high-frequency signal and a mixer for mixing a local signal having a frequency different from a frequency of the high-frequency signal with an output signal from the high-frequency amplification circuit and outputting an intermediate-frequency signal, comprising the first step of supplying the local signal to an input of the high-frequency amplification circuit, the second step of extracting only a frequency component of the local signal from the output signal from the high-frequency amplification circuit, the third step of detecting the extracted component and outputting a detected voltage, and the fourth step of comparing the detected voltage with a failure detection level and judging whether the high-frequency amplification circuit is normal.

The first radio communication unit according to the present invention comprises a receiver for receiving a high-frequency signal and a failure detection circuit for detecting a failure in the receiver, the receiver including a high-frequency amplification circuit for amplifying a high-frequency signal and a mixer for mixing a local signal having a frequency different from a frequency of the high-frequency signal with an output signal from the high-frequency amplification circuit and outputting an intermediate-frequency signal, and the failure detection circuit including a local signal supplying section for supplying the local signal to an input of the high-frequency amplification circuit, an extracting section for extracting only a frequency component of the local signal from the output signal from the high-frequency amplification circuit, a detecting circuit for detecting an output from the extracting section and outputting a detected voltage, and a failure detection circuit for comparing the detected voltage with a failure detection level and judging whether the high-frequency amplification circuit is normal.

The second radio communication unit according to the present invention comprises a high-frequency amplification circuit for amplifying a received high-frequency signal, a local signal generating section for generating a local signal having a frequency different from a frequency of the high-frequency signal, a mixer for mixing the local signal from the local signal generating section with an output signal from the high-frequency amplification circuit and outputting an intermediate-frequency signal, a local signal supplying section for supplying the local signal to the high-frequency amplification circuit, an extracting section for extracting only a frequency component of the local signal from the output signal from the high-frequency amplification circuit, a detecting circuit for detecting an output from the extracting section and outputting a detected voltage, and a failure detection circuit for comparing the detected voltage with a failure detection level and judging whether the high-frequency amplification circuit is normal.

According to the present invention, there is provided a radio communication method comprising the step of amplifying a received high-frequency signal in a high-frequency amplification circuit, the step of generating a local signal having a frequency different from a frequency of the high-frequency signal, the step of mixing the local signal with an output signal from the high-frequency amplification circuit and outputting an intermediate-frequency signal, the step of demodulating the intermediate-frequency signal into a baseband signal, the step of supplying the local signal to an input of the high-frequency amplification circuit, the step of extracting only the local signal from the output signal from the high-frequency amplification circuit, the step of detecting the extracted local signal and outputting a detected voltage, and the step of comparing the detected voltage with a failure detection level and judging whether the high-frequency amplification circuit is normal.

In addition, the system, method, and device of the present invention include means/step for/of switching failure detection levels in accordance with the information of an oscillation frequency set for a local signal or measuring the temperature of the receiver, generating temperature information, and varying a failure detection level.

### Brief Description of Drawings

Fig. 1 is block diagram of a failure detection system according to an embodiment of the present invention;
Fig. 2 is a graph showing an example of the frequency/gain characteristic of an amplifier 4 in the failure detection system in Fig. 1;
Fig. 3 is a graph showing an example of the frequency/attenuation amount characteristic of a bandpass filter 5 in a failure detection circuit in Fig. 1;
Fig. 4 is a graph showing an example of the frequency/gain characteristic of an amplifier 6 in the failure detection circuit in Fig. 1;
Fig. 5 is a graph showing an example of the frequency/attenuation amount characteristic of a bandpass filter 12 in the failure detection circuit in Fig. 1; and
Fig. 6 is a graph for explaining examples of thresholds for a failure detection circuit 14 in the failure detection circuit in Fig. 1.

### Best Mode of Carrying Out the Invention

An embodiment of the present invention will be described next with reference to the accompanying drawings.

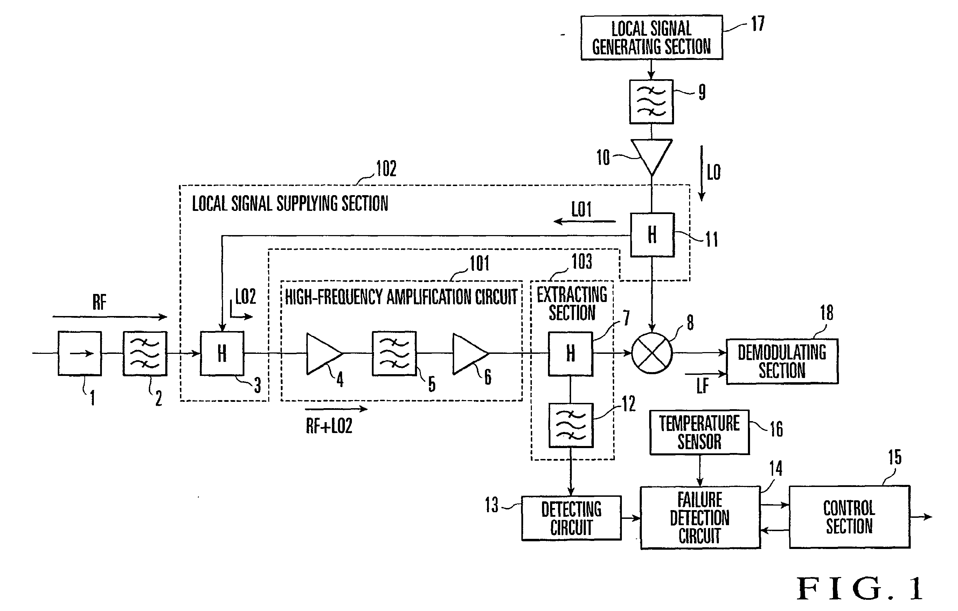

A failure detection system according to the present invention in Fig. 1 includes an isolator 1, bandpass filter (BPF) 2, distributor (hybrid) 3, amplifier 4, bandpass filter (BPF) 4, amplifier 6, distributor (hybrid) 7, mixer 8, bandpass filter (BPF) 9, amplifier 10, distributor (hybrid) 11, bandpass filter (BPF) 12, detecting circuit 13, failure detection circuit 14, control section 15, temperature sensor 16, local signal generating section 17, and demodulating section 18.

A high-frequency amplification circuit 101 is comprised of the amplifier 4, BPF 4, and amplifier 6, and can be formed by only the amplifier 4 as needed. A local signal supplying section 102 is constituted by the hybrids 3 and 11 and supplies a local signal to the high-frequency amplification circuit 101. A local signal extracting section 103 is constituted by the hybrid 7 and BPF 12 and extracts only a frequency component of a local signal LO from an output from the high-frequency amplification circuit 101.

The isolator 1 has a pass band corresponding to an RF signal RF which is a carrier to be received.

The BPF 2 is a filter that passes an RF signal (RF) contained in a received signal to sufficiently attenuate the frequency component of the local signal LO contained in the received signal.

The hybrid 3 is a 20-dB coupler that exhibits a low loss in the direction in which an RF signal is passed from the output of the BPF 2 to the input of the amplifier 4 and lets a signal be inputted to the other input connected to the output of the hybrid 11 with a coupling amount of about 20 dB.

The amplifier 4 is a linear amplifier (LNA) for amplifying an RF signal and a local signal LO2 inputted from the hybrid 3.

The BPF 5 is a filter that passes an RF signal.

The amplifier 6 is a linear amplifier (LNA) for amplifying an RF signal and the local signal LO2.

The hybrid 7 is a 20-dB coupler that exhibits a low loss in the direction in which an RF signal is passed from the output of the amplifier 6 to the input of the mixer 8 and outputs a signal with a coupling amount of about 20 dB in the direction in which it is connected to the BPF 12.

The mixer 8 is a frequency converter for outputting an IF signal (IF) corresponding to the difference between the RF signal inputted from the hybrid 7 and the local signal LO inputted from the hybrid 11.

The BPF 9 is a filter that passes the local signal LO of the input signal.

The amplifier 10 amplifies the local signal LO inputted from the BPF 9 and outputs the resultant signal to the hybrid 11.

The hybrid 11 is a 20-dB coupler that exhibits a low loss in the direction in which the local signal LO is passed from the output of the amplifier 10 to the input of the mixer 8 and outputs a signal with a coupling amount of about 20 dB in the direction in which it is connected to the hybrid 3.

The BPF 12 is a narrow-band filter that can extract only the local signal LO from the input signal outputted from the hybrid 7.

The detecting circuit 13 detects an output from the BPF 12.

The failure detection circuit 14 compares the output voltage outputted from the detecting circuit 13 with a predetermined threshold voltage. If the output voltage from the detecting circuit 13 is lower than the threshold voltage, the failure detection circuit 14 outputs a failure alarm signal to the control section 15.

The control section 15 receives a failure detection signal from the failure detection circuit 14 and notifies a host unit (not shown) of the occurrence of a failure in an amplification section or filter. The control section 15 outputs the set frequency information of the local signal LO to the failure detection circuit 14.

The temperature sensor 16 outputs the temperature information about the receiver to the failure detection circuit 14.

The local signal generating section 17 generates the local signal LO. As such a section, a synthesizer section for generating local signals having a plurality of transmission frequencies is used in a radio base station unit or the like.

The demodulating section 18 demodulates a baseband signal from an IF signal.

Signals in the system of the present invention shown in Fig. 1 will be described next.

Referring to Fig. 1, the output of the local signal generating section 18 (e.g., the loop output of the synthesizer section), i.e., the local signal LO (level VLO), is connected to the amplifier 10 through the BPF 9. The amplifier 10 amplifies the local signal LO and supplies the amplified output to the hybrid 11.

Let LO, RF, and IF be the frequencies of the amplified local signal LO, RF signal, and IF signal, respectively. A frequency component |RF ± LO| exists in an output from the mixer 8. Since the mixer 8 is used as a down-converter, the frequency of the IF signal is represented by |RF - LO| = IF.

If a branch local signal branched to the hybrid 3 by the hybrid 11 is represented by LO1 (level VLO1) the level of this signal is represented by VLO1 = VLO - 20 dB (including an insertion loss) because the level decreases by 20 dB which is the coupling amount of the hybrid 11 in the direction in which the signal is branched to the hybrid 3 by the hybrid 11.

The LO signal (VLO - 20 dB) inputted to the hybrid 3 further decreases by 20 dB which is the coupling amount of the hybrid 3, and VLO2 = VLO1 - 20 dB = VLO - 40 dB. Assume that all the energy at this level is inputted to the amplifier 4.

Although other frequency components exist, since they are not directly relevant to the present invention, a description thereof will be omitted.

The operation of the system in Fig. 1 will be described in detail below.

An input RF signal (RF) is inputted to the BPF 2 through the isolator 1.

The BPF 2 is a filter that outputs the RF signal to the hybrid 3 with a low loss but outputs the frequency component of the LO signal contained in an externally received signal to the hybrid 3 upon sufficiently attenuating it. This is because, when a high-level LO frequency component is externally inputted, this failure detection circuit malfunctions.

The hybrid 3 passes the RF signal with a low loss in the direction in which the RF signal inputted from the BPF 2 is outputted to the amplifier 4. On the LO1 side branched from the hybrid 11, however, the signal is inputted with the level of VLO1 = LO - 20 dB, and then is outputted to the amplifier 4 at a level further lowered by 20 dB which is the coupling amount of the hybrid 3.

The RF signal inputted from the hybrid 3 is amplified by the amplifier 4 and outputted to the BPF 5. In addition, VLO2 = VLO - 40 dB is also inputted from the hybrid 3. Likewise, this signal is amplified by the amplifier 4 and outputted to the BPF 5.

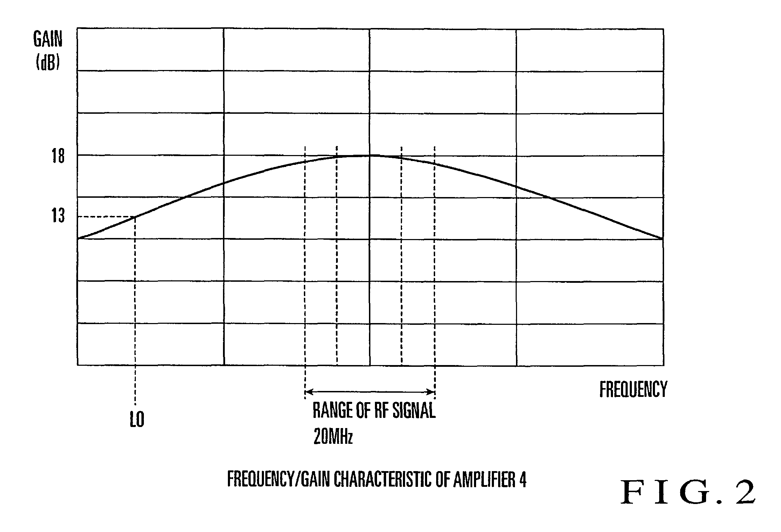

Fig. 2 shows an example of the frequency/gain characteristic of the amplifier 4. The amplifier 4 has a gain of 18 dB with respect to an RF signal (e.g., 20 MHz), and a gain of 13 dB with respect to the LO signal. The output level of a local signal from the amplifier 4 is given by VLO - 40 dB + 13 dB = VLO - 27 dB.

The RF and LO frequency components inputted from the amplifier 4 are outputted to the amplifier 6 through the BPF 5.

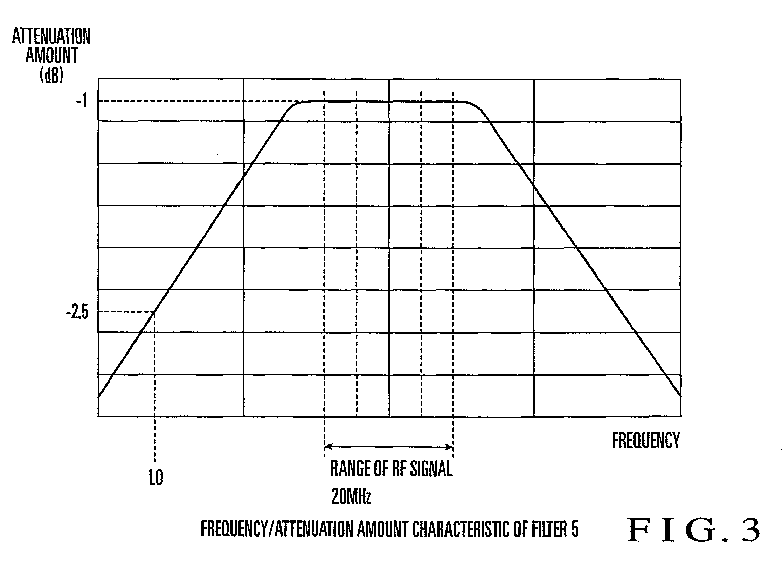

Fig. 3 shows an example of the frequency/attenuation amount characteristic of the BPF 5. The BPF 5 is a filter that exhibits an insertion loss of 1 dB with respect to an RF signal (e.g., 20 MHz), but has an attenuation amount of 25 dB (including an insertion loss) with respect to an LO frequency component. The output level of the LO frequency component from the BPF 5 is therefore given by VLO - 27 dB - 25 dB = VLO - 52 dB. The RF signal and LO signal outputted from the BPF 5 are inputted to the hybrid 7 through the amplifier 6.

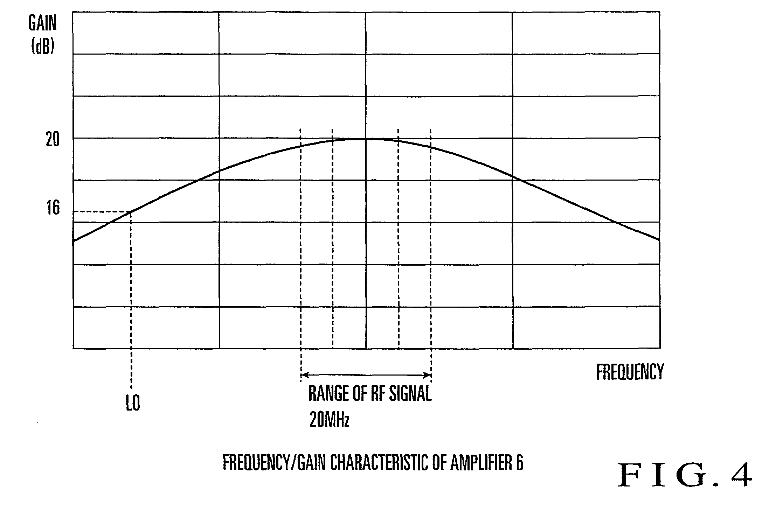

Fig. 4 shows the frequency/gain characteristic of the amplifier 6. The amplifier 6 has a gain of 20 dB with respect to an RF signal (e.g., 20 MHz), but has a gain of 16 dB with respect to an LO frequency component. The output level of the LO signal from the amplifier 6 is therefore given by VLO - 52 dB + 16 dB = VLO - 36 dB. The hybrid 7 passes the RF signal and LO signal inputted from the amplifier 6 with a low loss in the direction in which they are outputted to the mixer 8. The hybrid 7 outputs the RF signal and LO signal inputted from the amplifier 6 to the BPF 12 at a level further lowered by 20 dB which is the coupling amount of the hybrid 7 in the direction in which the signals are branched to the BPF 12. At this time, a local signal is outputted as VLO - 36 dB - 20 dB = VLO - 56 dB to the BPF 12.

The frequency component of the local signal LO is inputted from the loop output of the synthesizer section to the BPF 9, together with unnecessary wave components. The LO frequency component is filtered by the BPF 9 for sufficiently attenuating the unnecessary wave components existing in the loop output of the synthesizer section. The resultant frequency component is inputted to the amplifier 10. The amplifier 10 amplifies the input LO frequency component and outputs it as an LO signal to the hybrid 11.

The hybrid 11 outputs the LO signal inputted from the amplifier 10 with a low loss in the direction in which it passes through to the mixer 8. In the hybrid 11, the LO signal inputted from the amplifier 10 is outputted to the hybrid 3 at a level (VLO - 20 dB) lowered by 20 dB which is the coupling amount of the hybrid 11.

The mixer 8 frequency-converts the RF signal inputted from the hybrid 7 into an IF signal by using the LO signal inputted from the hybrid 11 and outputs the IF signal to the demodulating section (DEM) 18. A baseband signal is obtained from the output from the demodulating section 18.

In this case, the mixer 8 must perform sufficient isolation from the hybrid 11 in the direction of the hybrid 7 to always prevent the high-frequency component of the LO signal from being inputted to the BPF 12 through the hybrid 7 for the following reason. In detecting the detected voltage of the LO signal amplified and attenuated by the amplifier 4, BPF 5, and amplifier 6 to perform failure detection, if the voltage detected by the detecting circuit 13 by detecting the leakage component of the high-level LO signal from the mixer 8 becomes dominant, the failure detection precision of the amplifier and filter deteriorates.

In this case, the LO signal and RF signal inputted from the amplifier 6 to the hybrid 7 are inputted to the BPF 12 at a level lowered by 20 dB which is the coupling amount of the hybrid 7.

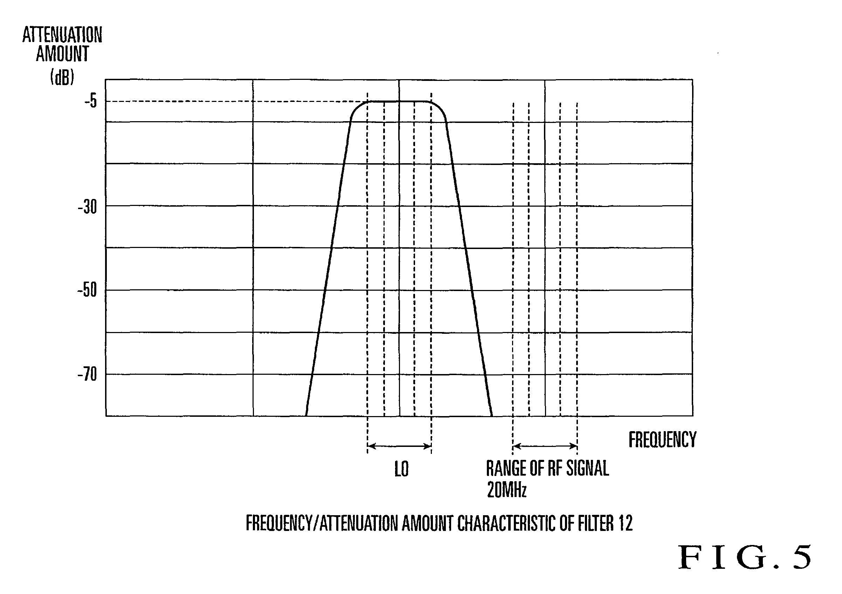

Fig. 5 shows an example of the characteristic of the BPF 12. As the BPF 12, a filter having a very steep characteristic to sufficiently attenuate an RF signal (e.g., 20 MHz) and a band narrow enough to pass only the local signal LO must be selected. This is because, if a varying RF signal or a frequency component other than the externally inputted local signal LO is outputted from the BPF 12, the voltage detected by the detecting circuit 13 varies, resulting in an operation error in the failure detection circuit of the present invention.

By using the narrow-band filter in this manner, only the frequency component of the local signal LO is outputted from the BPF 12 to the detecting circuit 13. In this case, since the insertion loss of the local signal LO is 5 dB, the level of the local signal LO inputted to the detecting circuit 13 is given by VLO - 56 dB - 5 dB = VLO - 61 dB.

The detecting circuit 13 detects the frequency component of the local signal LO inputted from the BPF 12, and outputs the detected voltage to the failure detection circuit 14. If the amplifier and filter are normally operating, the detected voltage having an input signal level of VLO - 61 dB is outputted. The failure detection circuit 14 compares a predetermined threshold voltage with the detected voltage outputted from the detecting circuit 13. If the detected voltage is lower than the threshold, the failure detection circuit 14 outputs, to the control section 15, information indicating that one of the hybrid 3, amplifier 4, BPF 5, amplifier 6, and hybrid 7, or one of the BPF 9, amplifier 10, and hybrid 11 has failed.

Since the gain characteristics of amplifiers, attenuation amount characteristics of BPFs, and coupling amount characteristics of couplers differ part by part. To let the failure detection circuit 14 have a more accurate threshold voltage, a threshold voltage set when all the parts normally operate must be stored in the failure detection circuit 14. If the local signal LO supplied from the synthesizer section has a frequency setting range, the failure detection precision can be further improved by setting thresholds at intervals at which the local signal LO can be set.

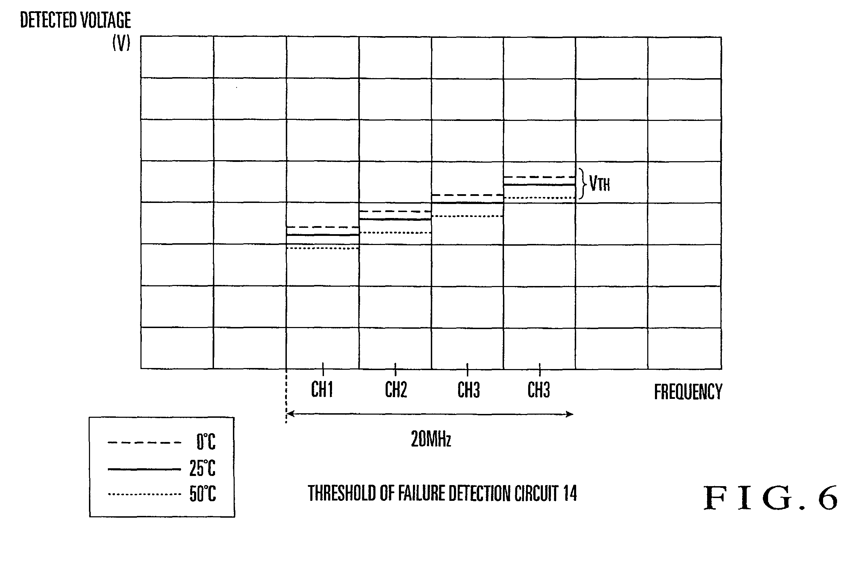

For example, in a radio base station unit based on the W-CDMA (code division multiple access) system, there are four 5-MHz-band carrier frequencies within a 20-MHz band. Therefore, the synthesizer section must set four local frequencies LO (channels CH1, CH2, CH3, and CH4 in Fig. 6) at 5-MHz intervals.

In this case, the information of the oscillation frequency at which the local signal LO sent from the control section 15 to the failure detection circuit 14 is outputted to perform control such that when frequency switching is performed, thresholds for failure detection are switched. If the temperature sensor 16 has outputted temperature information to the failure detection circuit 14, failure detection with higher precision can be performed by storing thresholds that can absorb variations in the gains of the amplifiers, the attenuation amounts of the BPFs, and the coupling amounts of the hybrids with the variation of temperature.

Fig. 6 shows how the oscillation frequency information of the local signal LO outputted from the control section 15 and temperature information outputted from the temperature sensor 16 are inputted to the failure detection circuit 14, and a threshold voltage VTH of the failure detection circuit 14 varies. Fig. 6 shows only the lower limit of thresholds used for failure detection. However, a threshold voltage as an upper limit can also be stored in the failure detection circuit 14.

As has been described above, the present invention has the following effects.

First, a failure in an amplifier or filter of a receiver or synthesizer section, a failure in which could not be detected by a loopback test, can be accurately detected by using a local signal from the synthesizer section without using any RF signal for the following reason. Since a detected voltage of a local signal component when the amplifier or filter of the receiver normally operates is stored in the failure detection circuit, failure detection can be performed with high precision by arbitrarily setting a threshold voltage for failure detection.

Second, a failure in an amplifier or filter of a receiver or synthesizer section can be detected in real time for the following reason. When a loopback test is to be performed, this test is generally performed once per day at most, and hence a failure in an amplifier, filter, or the like cannot always be monitored. According to the present invention, however, a failure in the receiver or synthesizer section can be detected in real time.

Third, failures in a filter in a receiver and an amplifier and filter of a synthesizer section can be detected by a very simple, inexpensive system without the necessity to connect a frequency oscillator other than an oscillator for RF signals to the input side of the receiver for the following reason. Since a local signal to be supplied to a mixer is branched to supply a frequency for failure detection, there is no need to have an oscillator separately, and a failure detection system can be easily formed at a low cost. If the present invention includes a frequency oscillator for a frequency different from the frequency of a local signal supplied to the mixer or a carrier frequency as a constituent element, an oscillator output is branched to be used as an input signal to a device for failure detection.

Fourth, since the failure detection level can be varied in accordance with the variation of temperature, local signal frequency (channel frequency), and the like, a failure can be detected more accurately.

## Claims

1. A failure detection system for detecting a failure in a receiver having a high-frequency amplification circuit for amplifying a high-frequency signal and a mixer for mixing a local signal having a frequency different from a frequency of the high-frequency signal with an output signal from the high-frequency amplification circuit and outputting an intermediate-frequency signal, **characterized by** comprising:
a local signal supplying section for supplying the local signal to an input of the high-frequency amplification circuit;
an extracting section for extracting only a frequency component of the local signal from the output signal from the high-frequency amplification circuit;
a detecting circuit for detecting an output from said extracting section and outputting a detected voltage; and
a failure detection circuit for comparing the detected voltage with a failure detection level and judging whether the high-frequency amplification circuit is normal.

2. A failure detection system according to claim 1, **characterized in that** said mixer mixes the output signal from the high-frequency amplification circuit with the local signal and outputs the intermediate-frequency signal having a frequency equal to a difference between the output signal from the high-frequency amplification circuit and the local signal.

3. A failure detection system according to claim 1, wherein the high-frequency amplification circuit comprises:
a first amplifier for amplifying the high-frequency signal;
a bandpass filter that passes the frequency component of the high-frequency signal of the output signal from said first amplifier; and
a second amplifier for amplifying an output signal from said bandpass filter and outputting the signal as the output signal from the high-frequency amplification circuit.

4. A failure detection system according to claim 1, further comprising a control section for varying the failure detection level in accordance with information of an oscillation frequency set for the local signal.

5. A failure detection system according to claim 1, further comprising a temperature sensor for measuring a temperature of said receiver, generating temperature information, and varying the failure detection level.

6. A failure detection method of detecting a failure in a receiver having a high-frequency amplification circuit for amplifying a high-frequency signal and a mixer for mixing a local signal having a frequency different from a frequency of the high-frequency signal with an output signal from the high-frequency amplification circuit and outputting an intermediate-frequency signal, **characterized by** comprising:
the first step of supplying the local signal to an input of the high-frequency amplification circuit;
the second step of extracting only a frequency component of the local signal from the output signal from the high-frequency amplification circuit;
the third step of detecting the extracted component and outputting a detected voltage; and
the fourth step of comparing the detected voltage with a failure detection level and judging whether the high-frequency amplification circuit is normal.

7. A failure detection method according to claim 6, **characterized in that** the mixer mixes the output signal from the high-frequency amplification circuit with the local signal and outputs the intermediate-frequency signal having a frequency equal to a difference between the output signal from the high-frequency amplification circuit and the local signal.

8. A failure detection method according to claim 6, wherein the high-frequency amplification circuit comprises:
a first amplifier for amplifying the high-frequency signal;
a bandpass filter that passes the frequency component of the high-frequency signal of the output signal from the first amplifier; and
a second amplifier for amplifying an output signal from the bandpass filter and outputting the signal as the output signal from the high-frequency amplification circuit.

9. A failure detection method according to claim 6, further comprising the step of varying the failure detection level in accordance with information of an oscillation frequency set for the local signal.

10. A failure detection method according to claim 6, further comprising the step of measuring a temperature of the receiver, generating temperature information, and varying the failure detection level.

11. A radio communication unit comprising a receiver for receiving a high-frequency signal and a failure detection circuit for detecting a failure in said receiver, **characterized in that**
said receiver includes a high-frequency amplification circuit for amplifying a high-frequency signal and a mixer for mixing a local signal having a frequency different from a frequency of the high-frequency signal with an output signal from the high-frequency amplification circuit and outputting an intermediate-frequency signal, and
said failure detection circuit includes
a local signal supplying section for supplying the local signal to an input of the high-frequency amplification circuit,
an extracting section for extracting only a frequency component of the local signal from the output signal from the high-frequency amplification circuit,
a detecting circuit for detecting an output from said extracting section and outputting a detected voltage, and
a failure detection circuit for comparing the detected voltage with a failure detection level and judging whether the high-frequency amplification circuit is normal.

12. A radio communication unit according to claim 11, wherein the high-frequency amplification circuit comprises:
a first amplifier for amplifying the high-frequency signal;
a bandpass filter that passes the frequency component of the high-frequency signal of the output signal from said first amplifier; and
a second amplifier for amplifying an output signal from said bandpass filter and outputting the signal as the output signal from said high-frequency amplification circuit.

13. A radio communication unit according to claim 11, wherein said failure detection circuit includes a control section for varying the failure detection level in accordance with information of an oscillation frequency set for the local signal.

14. A radio communication unit according to claim 11, wherein said failure detection circuit includes a temperature sensor for measuring a temperature of said receiver, generating temperature information, and varying the failure detection level.

15. A radio communication unit according to claim 11, wherein said radio communication unit is a radio base station unit.

16. A radio communication unit **characterized by** comprising:
a high-frequency amplification circuit for amplifying a received high-frequency signal;
a local signal generating section for generating a local signal having a frequency different from a frequency of the high-frequency signal;
a mixer for mixing the local signal from said local signal generating section with an output signal from said high-frequency amplification circuit and outputting an intermediate-frequency signal;
a local signal supplying section for supplying the local signal to said high-frequency amplification circuit;
an extracting section for extracting only a frequency component of the local signal from the output signal from said high-frequency amplification circuit;
a detecting circuit for detecting an output from said extracting section and outputting a detected voltage; and
a failure detection circuit for comparing the detected voltage with a failure detection level and judging whether the high-frequency amplification circuit is normal.

17. A radio communication unit according to claim 16, wherein said high-frequency amplification circuit comprises:
a first amplifier for amplifying the high-frequency signal;
a bandpass filter that passes the frequency component of the high-frequency signal of the output signal from said first amplifier; and
a second amplifier for amplifying an output signal from said bandpass filter and outputting the signal as the output signal from said high-frequency amplification circuit.

18. A radio communication unit according to claim 17, wherein said first and second amplifiers are linear amplifiers.

19. A radio communication unit according to claim 17, wherein said first and second amplifiers are amplifiers each exhibiting a lower gain with respect to the local signal than with respect to the high-frequency signal.

20. A radio communication unit according to claim 17, wherein said bandpass filter is a bandpass filter exhibiting larger attenuation with respect to the local signal than with respect to the high-frequency signal.

21. A radio communication unit according to claim 16, wherein said failure detection circuit includes a control section for varying the failure detection level in accordance with information of an oscillation frequency set for the local signal.

22. A radio communication unit according to claim 16, wherein said failure detection circuit includes a temperature sensor for measuring a temperature of said receiver, generating temperature information, and varying the failure detection level.

23. A radio communication unit according to claim 16, further comprising, between said local signal generating section and said mixer, a filter that passes the local signal and an amplifier for amplifying an output from said filter.

24. A radio communication unit according to claim 16, wherein said local signal supplying section comprises a first hybrid for branching a signal from said local signal generating section into two signals and supplying one of the branched signals to said mixer, and a second hybrid for receiving the other of the branched signals and the high-frequency signal and outputting the signals to said high-frequency amplification circuit.

25. A radio communication unit according to claim 24, wherein said second hybrid is a coupler.

26. A radio communication unit according to claim 16, wherein said extracting section comprises a hybrid for branching an output from said high-frequency circuit into two signals and inputting one of the branched signals to said mixer, and a filter that passes only a local signal of the other of the branched signals.

27. A radio communication device according to claim 26, wherein said hybrid is a coupler.

28. A radio communication unit according to claim 16, wherein said local signal generating section is a synthesizer.

29. A radio communication unit according to claim 16, wherein said radio communication unit is a radio base station unit.

30. A radio communication unit according to claim 16, further comprising a demodulating section for demodulating an output signal from said mixer.

31. A radio communication method **characterized by** comprising:
the step of amplifying a received high-frequency signal in a high-frequency amplification circuit;
the step of generating a local signal having a frequency different from a frequency of the high-frequency signal;
the step of mixing the local signal with an output signal from the high-frequency amplification circuit and outputting an intermediate-frequency signal;
the step of demodulating the intermediate-frequency signal into a baseband signal;
the step of supplying the local signal to an input of the high-frequency amplification circuit;
the step of extracting only the local signal from the output signal from the high-frequency amplification circuit;
the step of detecting the extracted local signal and outputting a detected voltage; and
the step of comparing the detected voltage with a failure detection level and judging whether the high-frequency amplification circuit is normal.
